Europäisches Patentamt

European Patent Office

Office européen des brevets

(11) Publication number: **0 298 588**
**A1**

# (12) EUROPEAN PATENT APPLICATION

(21) Application number: **88304178.2**

(22) Date of filing: **09.05.88**

(51) Int. Cl.⁴: **G01B 11/24**

(30) Priority: **08.06.87 US 59451**

(43) Date of publication of application:
**11.01.89 Bulletin 89/02**

(84) Designated Contracting States:
**AT BE CH DE ES FR GB GR IT LI LU NL SE**

(71) Applicant: **Ovonic Imaging Systems, Inc.**
**1896 Barrett Street**
**Troy Michigan 48084(US)**

(72) Inventor: **Vala, John D.**
**1122 Sutherland**
**Plymouth Michigan 48170(US)**

(74) Representative: **Jackson, Peter Arthur et al**
**GILL JENNINGS & EVERY 53-64 Chancery**
**Lane**
**London WC2A 1HN(GB)**

(54) **Shadow detecting optical micrometer.**

(57) Dimension, surface condition and configuration related information may be accurately determined by positioning the object to be measured or counted between an array of photoresponsive elements and a lens, said lens adapted to receive divergent rays of light from a source located at the focal point thereof and collimatingly direct those rays toward said array. The shadow of the object may thereby be accurately measured by said array.

FIG. 1

## SHADOW DETECTING OPTICAL MICROMETER

### FIELD OF THE INVENTION

The invention relates generally to optical image scanning devices, and more particularly, to electronic image sensing devices which include therein an array of thin-film photoresponsive elements adapted to optically detect a pattern of information and photogenerate an electrical output signal corresponding thereto.

### BACKGROUND OF THE INVENTION

Optical image scanning devices are being increasingly used in a variety of products and for a diversity of applications. For purposes of understanding the subject invention "Optical Image Scanning Devices" are defined, for use herein, as systems including one or more arrays of thin film photoresponsive elements operatively disposed opposite a collimated light source, said arrays designed to scan a pattern of information or data and photogenerate electrical signals corresponding thereto.

Optical image scanning devices have been and will continue to be adapted for use in a wide variety of data sensing applications. Such applications range from sensing dimensional information and surface shape of an object, to patterning graphic information, such as a photograph, a drawing, a design on fabric; and even replicating alpha-numeric data such as printed or written matter. Basically, such optical image scanning devices convert a pattern of information into electrical signals which may be supplied to downstream apparatus for further processing, storage or display. One particular application, addressed in detail hereinafter, is in industrial production processes wherein said devices are used to measure the size and/or surface shape of materials such as lumber, plastics and metals. This is to be contrasted with other automated inspection devices which are predicated upon older technologies such as surface contact techniques and manual physical inspection. Optical image scanning devices typically include one or more photoresponsive circuits configured and disposed so as to simultaneously or sequentially address various portions of the surface area of the object being scanned.

There are currently a number of basic, but divergent, approaches by which optical image scanning devices operate. Charge coupled devices (CCD's) represent one approach in which the sensor elements are fabricated from discrete solid state devices of single crystal silicon so as to form an array of photoresponsive elements. While CCDs are known to provide a high degree of photosensitivity and resolution, they are relatively small in size, the typical 2-dimensional matrix being approximately 1 cm square, and the largest 1-dimensional array being approximately 3 to 4 inches in length. These size constraints impose significant limitations on the utility of CCDs in those applications wherein large areas must be scanned. Therefore, in those situations in which the object to be scanned includes a pattern of information having a dimension larger than that of the CCD, an optical system must be used in connection therewith in order to project the pattern of information at a reduced size onto the CCD. Such a reduction in size of necessity also results in a corresponding reduction in the resolution of the image generated by the CCD. Such loss of resolution is due to two factors, inherent resolution losses occasioned by the optical system itself, and losses in resolution due to the reduction process. The only possible manner in which to increase the resolution of the CCDs would be to either increase the packing density of the pixels in the CCD or to increase the size of the CCD. Both alternatives present significant problems. Pixel density is governed by photolithographic processes, which are themselves inherently restricted by the diffraction limits of light. Thus the number of pixels available on a given CCD has substantially met its limit. Alternatively, processing constraints effectively limit the maximum size to which crystalline CCDs may be economically manufactured. Generally, CCDs cannot be manufactured economically in sizes exceeding 6· to 8 inches in diameter. Furthermore, processing steps introduce added defects as such devices increase in size; each defect effectively destroying at least one pixel element and deleteriously effecting the resolution capability of the CCD.

It thus becomes apparent that while CCDs provide high quality resolution, limitations associated with their relatively small size, cost of fabrication and complex manufacturing processes render them unsuitable for the optical scanning and replication of large area objects.

An alternative approach to the fabrication of single crystal optical scanners is presented by the use of deposited thin film semiconductor material from which to fabricate said scanners. Such devices may be economically manufactured by the use· of chemical vapor deposition processes in which successive layers of semiconductor alloy material are deposited onto a variety of different substrates. By appropriately patterning these layers, an unlimited variety of device configurations may be obtained in economical, readily controlled fabricaton processes.

Recently, considerable progress has been made in developing processes for depositing thin film semiconductor alloy materials. Such materials can be deposited to cover relatively large areas and can be doped to form p-type and n-type semiconductor materials for the production of semiconductor devices such as p-i-n type photodiode equivalent, which in some cases are superior to those produced by their crystalline counterparts. One particularly promising group of thin film materials are the amorphous materials. As used herein, the term "amorphous" includes all materials or alloys which have long range disorder although they may have short or intermediate range order, or even contain at times, crystalline inclusions. Also as used herein, the term "microcrystalline" is defined as a unique class of said amorphous materials characterized by a volume fraction of crystalline inclusions, said volume fraction of inclusions being greater than a threshold value at which the onset of substantial changes in certain key parameters such as electrical conductivity, band gap and absorption constant occur. It is now possible to prepare by glow discharge, or other vapor deposition processes, thin film amorphous silicon, germanium or silicon-germanium alloys in large areas, said alloys possessing low concentrations of localized states in the energy gap thereof and high quality electronic properties.

Thin film semiconductor alloy material may be readily manufactured to cover large areas by mass production processes and therefore provide for the economic fabrication of large area arrays of photoresponsive elements. The use of such large area arrays eliminates the need for the optical reduction of a pattern of information to be imaged so as to conform that pattern of information to the corresponding size of a small area sensor array, thereby eliminating the loss of resolution, described hereinabove and necessarily experienced with CCD arrays. Additionally, since the arrays of photoresponsive elements can be fabricated from thin film semiconductor alloy material so as to be larger in size than the pattern of information of the object being scanned, that pattern of information can be optically projected onto the array in life size or enlarged (rather than a reduced) form thereby increasing the effective resolution of the optical image scanning device. In this manner, high resolution image reproduction may be achieved without the need for employing precision photolithographic techniques, thereby maintaining high product yields and insuring efficiency of fabrication and low manufacturing costs.

For example, if a thin film array of photoresponsive elements is fabricated having a 50 micron pitch, that is to say 50 microns center-to-center spacing between the adjacent photoresponsive elements thereof, the array will provide a resolution of 20 lines/millimeter. This resolution is better than that attainable when scanning a 35 square millimeter pattern of information with presently available CCDs. However, it should be noted that such a fifty micron pitch is readily achieved at very high yields utilizing conventional photolithographic techniques with amorphous silicon alloy materials. Therefore, by simply maintaining ·the 50 micron pitch and fabricating a photosensor array of approximately 54 millimeters on an edge, a 1.16 million pixel array would be realized. Thus, it may be seen that by increasing the size of the array of photoresponsive elements, and by utilizing only presently available processing techniques, resolution equivalent to or better than the best anticipated resolution capable of being achieved by single crystal charge coupled devices is presently available through the use of amorphous silicon alloy material. Since thin film photoresponsive arrays can be made in sizes up to several feet in length or greater, and even assuming no new advances in said amorphous silicon technology, the resolving power of charge coupled devices can be exceeded by orders of magnitude with the large area arrays of thin film photoresponsive elements of the subject invention.

While the foregoing discussion is based upon the use of a 50 micron pitch, a 29 micron pitch or less may be readily achieved in the fabrication of thin film arrays of photoresponsive amorphous silicon alloy elements. Of course, the use of a 29 micron pitch will serve to increase the pixel density of the aforementioned 35 square millimeter array to about 1.4 million and by utilizing still larger area arrays, even higher resolution may be achieved.

The use of such high resolution linear or matrix arrays of thin film amorphous silicon alloy elements for precisely determining or accurately detecting one or more dimensions or surface conditions of an object or series of objects passing therepast has not beed addressed by the prior art. Further, such high resolution arrays have not previously been employed for accurately measuring the configurational outline or silhouette of an object or series of objects passing therepast.

Further, while previous photoresponsive arrays were, of necessity used in conjunction with optical image enlarging or enhancing devices in order to achieve high resolution imaging, such optical enlargement or enhancement devices also created problems related to discordant shadows and parasitic diffraction of rays of light emanating from the surface of the objects being measured. Therefore, previously described large area, high resolution arrays of thin film photoresponsive elements could not be utilized to measure precise dimensional tolerances or to indicate slight deviations from a norm without also employing convergent optical lens systems in conjunction therewith.

As will be shown hereinafter, the photoresponsive arrays disclosed by the instant invention eliminate the constraints presented in the linear photoresponsive array optical scanning devices of the prior art described hereinabove. Further, this invention eliminates the resolution limits which have been associated with the use of photoresponsive CCD arrays, and thus makes possible high resolution optical image scanning detectors for the precise measurement of dimensional, surface conditional or configurational related information of an object or series of objects passing therepast.

Finally, the instant invention further describes a low-cost, easily fabricated optical image scanning detector, said detector formed of thin film semiconductor alloy material deposited onto a thin sheet of substrate material. There is, provided in this manner, an array which is sufficiently flexible to be adapted for use in many non-planar scanning applications.

These and other objects and advantages of the instant invention will become readily apparent to one skilled in the art, from the detailed description and drawings of the invention which follow.

## SUMMARY OF THE INVENTION

There is disclosed herein, a method and apparatus designed to accurately detect configurational or other dimension and surface condition related information of an object or a stream of objects. The method includes the steps of: projecting divergent light from a source in at least one direction towards a collimating lens, said source positioned at the focal point of the lens; spacedly disposing an elongated array of photoresponsive elements in the path of the collimating lens so that the elements thereof are able to detect the total amount of light incident upon them during a given period of time; and passing an object or stream of objects between the collimating lens and the array of photoresponsive elements so that the object or stream of objects interrupts at least part of the light rays directed from the light source toward the array. In this manner, the information related to the configuration, the surface condition or the dimensional outline of the shadow cast by said objects is adapted for accurate detection by said array.

The apparatus includes a light source (which may be of the tungsten halogen, xenon strobe, arc discharge, laser or standard filament lamp variety, and) which may be either a point source or distributed source; a collimating lens, such as a Fresnel lens or other plano-convex lens, capable of bending radiation projected by the source into sharp, collimated light rays directed toward an array of photoresponsive elements. The photoresponsive array is formed to define a series of individual photovoltaic pixels preferably arranged in a substantially linear array. The pixel elements are isolated from one another such that the electrical signal photogenerated by each discrete pixel may be separately measured.

The object or series of objects which provide the pattern of information to be sensed is passed between the collimating lens and the array of photoresponsive elements. Thus, as each discrete beam of light from the source strikes individual pixel elements associated therewith, the isolated pixel elements photogenerate an electrical signal, the magnitude of which is measured by independent processing means. Light beams striking an object to be scanned for configurational, dimensional or surface condition information cast a shadow and thereby are blocked from the photoresponsive array. Depending upon the sensitivity of the photoresponsive elements and the threshold levels designed into the signal processing apparatus, the photoresponsive pixel elements which are shadowed by the object are either unable to photogenerate any electrical signal at all or photogenerate electrical signals of reduced magnitude as compared to the non-shadowed elements. The independent processing means then reads the photogenerated signals emanating from the shadowed as well as non-shadowed pixel elements and compares the result with the configuration, dimension or surface condition previously set into memory so as to precisely determine the size, configuration or surface condition of the object or its shadow. Of course, rather than comparing the information photogenerated by the array, the apparatus may be tailored to provide a dimensional analysis (such as deviation from a norm). This only depends on the manner in which the output signals of the array of photoresponsive elements are processed by downstream software.

Regardless of the type of downstream processing, due to the use of collimated light and the concommitant minimalization of parasitic diffraction, the size of the shadow detected by the array of photoresponsive elements is substantially the same as the size of the object to be scanned. Thus the optical image scanning device of the instant invention provides information related to a precisely measured condition of the interposed object. It is important to note that due to the collimated nature of the light beams, a precise measurement of the object may be obtained, regardless of the relative position of the object between the collimating lens and the photoresponsive elements.

The apparatus may also be adapted to perform a variety of functions such as determining the presence of a particular component of the object or the series of objects to be scanned. It should further be apparent that by arranging a plurality of linear arrays of photoresponsive elements in end-to-end alignment, each array may be adapted to accurately detect dimensional, configuration or surface conditional information related to a given portion of an elongated object. In this manner, resolution is not lost as it would be if a single array had to be focused relative to the entire length of the object.

The specific embodiment of this optical imaging scanning device, as contemplated by this disclosure is to detect the presence of small aberrations of either a given object or of one object out of a stream of substantially similar objects being scanned. As should by now be apparent, the high resolution scanning which is possible through the use of this scanning device, makes it particularly well suited for such industrial applications as assembly line quality control.


BRIEF DESCRIPTION OF THE DRAWINGS


FIGURE 1 is a perspective view of a preferred embodiment of the shadow detector of the present invention, as that detecting apparatus is operatively disposed relative to a collimating lens for scanning a single object for aberration;

FIGURE 2 is a perspective view a second embodiment of the shadow detector of the instant invention in which a second convergent lens is operatively disposed on the distal side of an object to be scanned for further focusing the collimated light beams shadowed by that object; and

Figure 3 is a perspective view of a second embodiment of the shadow detector of the instant invention wherein a set of polarizing lenses is operatively disposed with one lens on the proximal and one lens on the distal side of the object to be scanned, in order to accentuate defects in the object.


DETAILED DESCRIPTION OF THE DRAWINGS


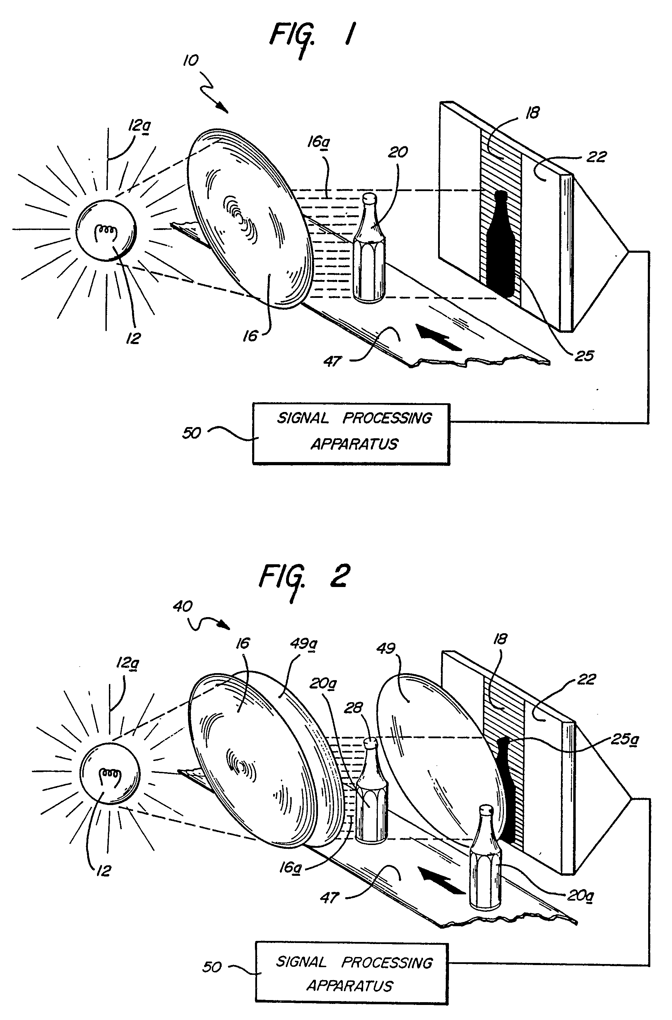

Turning now to the drawings and as particularly illustrated in FIGURE 1, a perspective view of one preferred embodiment of the present invention consisting of the shadow detecting optical micrometer or optical image scanning device is depicted generally by the reference numeral 10. The device 10 includes a light source 12 formed as a point source or a distributed source of incandescent radiation. The source 12 may be of the tungsten halogen, xenon strobe, arc discharge, laser or standard filament lamp variety.

A portion of the light generated by the light source 12 travels generally in the direction of a convex collimating lens 16, which may typically be a Fresnel lens. The collimating lens 16 is adapted to bend the divergent rays of light $12\underline{a}$ projected by said source 12 so as to provide sharp, collimated rays of light $16\underline{a}$ specifically directed towards an elongated array of photoresponsive elements, generally 18. For optimal performance, the collimating lens 16 is located at a distance from the light source 12 approximately equal to the focal length of the lens 16. Further, the collimating lens 16 is operatively disposed a distance from the photoresponsive array 18 which will minimize the parasitic diffraction of collimated rays resulting from the shadow 25 cast by an object 20 interposed between the collimating lens 16 and the photoresponsive array 18. Note that the object 20 is illustrated in Figure 1 as operatively disposed on a moving conveyor belt 47 for determining, in an industrial setting, the quality of the bottle cap fastening operation. It should be apparent that the system of the instant inventions finds further response and utility in countless other industrial settings.

The array of photoresponsive elements 18 is preferably linear in configuration and formed of a plurality of small pixel elements. Each pixel element is preferably fabricated as a p-i-n type photovoltaic cell, said p-i-n layers being formed of successive thin film amorphous silicon alloy materials deposited by glow discharge deposition atop a thin, flexible substrate, such as stainless steel. The technology relevant to and manufacture of those photoresponsive elements is disclosed in commonly assigned U.S. Patent No. 4,660,095, the disclosure of which is incorporated herein by reference. It is important to note that the plurality of discrete photovoltaic cells are arranged in a linear array, adapted for operation in the fourth quadrant of their associated IV curve and isolated from one another such that the electrical signal photogenerated by each can be individually measured by downstream signal measurement and processing apparatus 50. It is to be noted that the linear array of photoresponsive elements 18 is illustrated in Figure 1 as formed on part of a block or board 22, said board adapted to provide rigidity for the array and isolate, to some degree, ambient light.

The shadow detecting apparatus 10 depicted in Figure 1 is shown operatively disposed for the detection of minute aberrations of projected light rays 16a from a predetermined norm for the object to be scanned 20. More particularly, and as depicted in Figure 1, the object 20 is interposed between the collimating lens 16 and the array of photoresponsive elements 18. The projected radiation 12a (as collimated by lens 16 into rays 16a) from the source 12 which strikes the object 20 casts a shadow 25 upon the array 18, thereby preventing those discrete photovoltaic cells upon which the shadow 25 falls from photogenerating as strong an electrical signal as photogenerated by those discrete photovoltaic cells which are not shadowed by said object 20. By simply comparing the total number of photoresponsive pixel elements photogenerating an electrical signal of high intensity (reaching a preset threshold level) to those photogenerating a signal of lesser intensity (below said preset threshold level), the downstream processing apparatus 50 is adapted to accurately determine the surface area cast by the shadow 25 onto the array of photoresponsive elements 18 and compare that shadowed area to the widest cross-sectional area of the object 20 (which is preprogrammed into the independent processing apparatus 50).

Since, according to the principles of the subject invention, the shadow 25 is created by collimated light beams, said shadow is substantially identical in size, i.e., total surface area of the shadow, to the widest cross-sectional area of the object 20. Thus, by simply comparing dimensions of the measured shadow 25 with known dimensions of the object 20, the device is adapted to accurately determine deviations of the object 20 passing therepast (as on conveyor belt 47) from the predetermined dimensions placed into the memory of the downstream processing apparatus 50. It is also possible to measure a successive series of small portions of the entire object 20 as it passes between the collimating lens 16 and the photoresponsive array 18. As each successive portion of the object 20 passes between the collimating lens 16 and the photoresponsive array 18, the device measures said sections, thus measuring the entire object, though not all at one time.

Alternatively, information concerning the surface configuration or dimensional analysis of the object to be scanned 20 may be fed into the downstream signal processing apparatus 50. Due to the fact that the light rays projected from the source 12 have been collimated, the array of photoresponsive elements 18 are able to photogenerate signals which are very accurately determinative of the actual surface configuration or dimensions of the object to be scanned. By comparing the dimensions of that object relative to said known values, it is possible to precisely determine those objects which are defective or the degree to which they deviate from preset limits of acceptability.

Turning now to Figure 2 (wherein like elements are denoted by like references numerals), it can be seen that by even subtly changing the shape/size of the object 20a, a larger (or smaller) shadow 25a is cast upon the array of photoresponsive elements 18, thereby photogenerating a different, though no less accurate, measurement to be processed and compared by said signal processing apparatus 50. It has been found that accurate measurements of fractions of an inch can be determined by the micrometer of the subject invention.

FIGURE 2 depicts a shadow detecting optical micrometer, indicated generally by the reference numeral 40. The shadow detecting micrometer 40 is substantially similar to the shadow detecting micrometer 10 illustated and described with respect to FIGURE 1 but with the addition in Figure 2 of several features. A first feature is the depiction of a second object to be scanned operatively positioned on the conveyor belt 47. It is in this manner, that it becomes industrially possible to transport a series or stream of substantially similar objects between the collimating lens 16 and the photoresponsive array 18. The FIGURE 2 embodiment also differs from the Figure 1 embodiment by the disposition of an optional lens 49 between the object to be scanned 20a, which is positioned on the conveyor belt 47, and the array 18. In Figure 2, optional lens 49 is a converging lens The optional lens 49 in this case is employed to further sharpen and focus the beams of collimated light 16a for reception upon the photoresponsive elements of the array 48 so as to provide for the even more accurate measurement of the object to be scanned 20a. For example, the lens system illustrated in Figure 2 makes it possible for the optical image scanning device 40 to accurately determinate even the 1/16 of an inch cant of the bottle cap 28, thereby alerting assembly line personnel to the fact that the cap 28 of the bottle 20a is not tightly sealed. Such minute deviations from acceptable tolerance limits have heretofore been undetectable by scanning systems of the prior art.

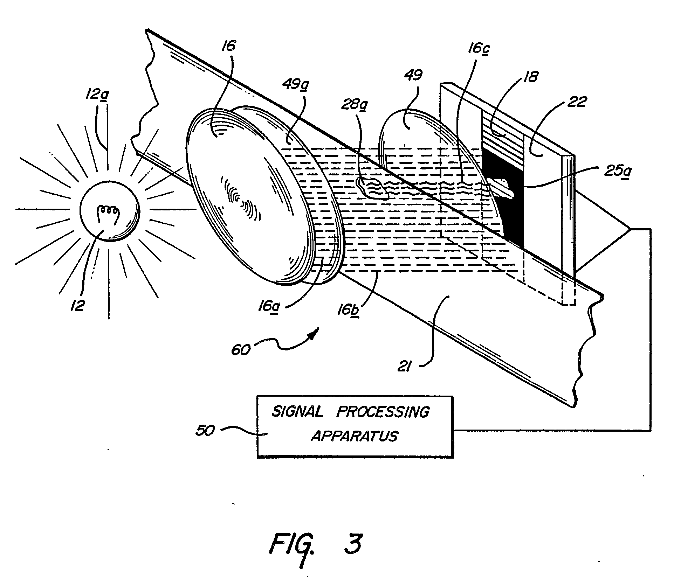

Turning now to Figure 3, (wherein like elements are denoted by like reference numerals) the optional lens 49 is cooperatively joined by a second optional lens 49a. These lenses are employed so as to adapt the embodiment of the micrometer 60 for specifically sensing a surface condition, such as a flaw, in a continuous, moving sheet of substantially transparent material, such as a roll of mylar 21. In Figure 3, optional lenses 49 and 49a are operatively disposed relative to the light source 12, the collimating lens 16 and the object 21 for polarizing the collimated light 16a. More particularly, there is illustrated an embodiment of the invention wherein a particular lens 49a is selected for the purpose of polarizing collimated light rays 16a which have passed through collimating lens 16 from the light source 12. The polarized light waves 16b then move through said predominantly defect-free sheet of Mylar 21 and strike said second polarizing lens 49. In those regions in which the sheet is indeed defect free, the second polarizing lens 49 prevents further transmission thereof and a shadow is cast upon the array of photoresponsive elements 18 disposed on the board 22. If, however, the polarized light waves 16b pass through a defective region 28a (such as a hole) in said mylar sheet 21, said waves 16b have their polarized character altered such that the waves 16b are transmitted through said second lens 49, and onto the array of photoresponsive elements 18. Thus, the majority of the surface area of said array of photoresponsive elements 18 will remain shadowed, except for that portion of the array corresponding to the defective area 28a, illuminated by non-filtered light rays 16c. By employing an embodiment of the micrometer 40a such as that dipicted in Figure 3, assembly line personnel can be alerted to defects, i.e., flaws in the surface condition, of an object (such an elongated web) moving therepast. It should be apparent that the Figure 3 embodiment of the shadow detecting optical micrometer 60 must be tailored specifically to the nature of the object 20 being scanned, and the type of detail for which the scanning has been effected.

While three specific embodiments of the instant invention have been illustrated and described herein, it is to be understood that they are merely representations, and are not exhaustive of all embodiments available. An additional embodiment not specifically depicted would entail linking a series of linear arrays of photosensitive elements in end-to-end configuration so as to form longer linear arrays in order to measure taller or longer objects. It is therefore the claims which follow and not any specific portion of the subject specification which is intended to define the scope of the instant invention.

## Claims

1. Apparatus (10) for accurately detecting surface, configurational or other dimension related information of an object (20) or stream of objects (20a) at least momentarily positioned between projecting means (12a) and a photoresponsive array (18); said apparatus characterized in that:

means 12) for projecting divergent rays of light in at least a preselected direction;

an elongated array of photoresponsive elements (18) spacedly disposed so as to receive rays of light from said projecting means, said photoresponsive elements adapted to detect the total amount of light incident thereupon over a given period of time and photogenerate an electrical signal corresponding thereto; and

lens means (16) operatively disposed between said projecting means and said photoresponsive elements with said projecting means disposed at the focal point of said lens means; said lens means adapted to collimate said divergent rays of light so as to provide sharp, collimated light rays directed toward said array of photoresponsive elements, whereby the shadow of an object or stream of objects placed along or moved past said collimated rays can be accurately detected by said array.

2. Apparatus as in Claim 1 wherein said array of photoresponsive elements is spaced from said lens means a distance adapted to minimize parasitic diffraction losses from the image of said object.

3. Apparatus as in Claim 1 wherein each element of said elongated array of photoresponsive elements is a photovoltaic cell.

4. Apparatus as in Claim 3 wherein said photogenerated electrical signal of each of said cells is individually measurable.

5. Apparatus as in Claim 4 wherein individual pixels are adapted to operate in the fourth quadrant of the IV curve thereof.

6. Apparatus as in Claim 4 wherein said photovoltaic cells are fabricated as p-i-n type diodes formed from successively deposited layers of amorphous silicon alloy material.

7. Apparatus as in Claim 1 wherein the lens means is a cylindrical or spherical convex lens.

8. Apparatus as in Claim 9 wherein the convex lens is a Fresnel lens.

9. Apparatus as in Claim 2 wherein the array of photovoltaic elements and said lens means are similarly sized so as to provide a substantially full size shadow of detectible objects.

10. Apparatus as in Claim 14 further including a converging lens means (49) operatively disposed relative to said collimating lens means and said array of photoresponsive elements.

11. Apparatus as in Claim 1 further including a pair of spacedly disposed polarizing lenses (49, 49a) for detecting the surface condition of a transparent object moving therepast.

12. Apparatus as in Claim 11, wherein said object is disposed between said polarizing lenses.

## FIG. 1

SIGNAL PROCESSING
APPARATUS

## FIG. 2

SIGNAL PROCESSING
APPARATUS

FIG. 3

| | DOCUMENTS CONSIDERED TO BE RELEVANT | | EP 88304178.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | <u>EP - A2 - 0 196 811</u> (EISAI) <br> * Totality * <br> -- | 1,4,7,9 10 | G 01 B 11/24 |
| X | <u>DE - A - 2 140 939</u> (KABEL) <br> * Totality * <br> -- | 1,4,7,9 | |
| X | <u>DD - A1 - 221 545</u> (ZEISS) <br> * Fig. 1; page 5 * <br> -- | 1,4,7,9 | |
| A | <u>GB - A - 2 003 269</u> (HUGIN) <br> * Totality * <br> ---- | | |
| | | | **TECHNICAL FIELDS SEARCHED (Int. Cl.4)** <br><br> G 01 B 9/00 <br> G 01 B 11/00 |

The present search report has been drawn up for all claims

| Place of search | Date of completion of the search | Examiner |
|---|---|---|
| VIENNA | 27-10-1988 | TOMASELLI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82